# EUROPÄISCHE PATENTSCHRIFT

(11) **EP 3 774 153 B1**
(45) Veröffentlichungstag und Bekanntmachung des Hinweises auf die Patenterteilung: **13.04.2022**
(21) Anmeldenummer: 19723674.8
(22) Anmeldetag: 25.04.2019
(51) Int. Cl.: B23K 9/173, B23K 35/38, B23K 9/167, B23K 35/30, B23K 9/04

(54) **FERTIGUNGS- UND REPARATURSCHWEISSEN VON GUSSEISEN MIT KUGELGRAPHIT**
PRODUCTION AND REPAIR WELDING OF CAST IRON WITH SPHEROIDAL GRAPHITE
SOUDAGE DE FABRICATION ET DE RÉPARATION DE LA FONTE À GRAPHITE SPHÉROÏDAL

(30) Priorität: 23.05.2018 EP 18173878
(43) Veröffentlichungstag der Anmeldung: 17.02.2021
(73) Patentinhaber: Siemens Energy Global GmbH & Co. KG, 81739 München (DE)
(72) Erfinder: BRUSSK, Stefan, 45479 Mülheim an der Ruhr (DE); LUITHLE, Alexander, 44789 Bochum (DE); SCHREIBER, Tim, 58454 Witten (DE)
(86) Internationale Anmeldenummer: PCT/EP2019/060585
(87) Internationale Veröffentlichungsnummer: WO 2019/223949

(56) Entgegenhaltungen:
- EP-A1- 1 844 894
- WO-A2-2004/058441
- DE-A1-102007 044 662

## Beschreibung

Die Erfindung betrifft ein Verfahren zur Herstellung einer Oberfläche eines Grundwerkstoffes, wobei der Grundwerkstoff Gusseisen aufweist.

Gusskomponenten, die aus Gusseisen mit Kugelgraphit hergestellt werden, werden beispielsweise in Strömungsmaschinen wie z. B. in Dampfturbinen eingesetzt. Diese Gusskomponenten können großvolumig ausgebildet sein. Bei der Herstellung der Gusskomponente können Gussfehler, wie z. B. Poren oder Lunker auftauchen. Von Fall zu Fall muss hierbei entschieden werden, ob die Gusskomponente mit dem bestehenden Fehler ohne weitere Maßnahmen verwendet werden kann. Eine schweißtechnische Bearbeitung solcher Gussbauteile ist nur bedingt möglich. Beispielsweise wäre eine Schweißung mit artgleichem Schweißgut schwierig, da eine hohe Vorwärmtemperatur, die zwischen 550°C und 650°C liegen muss, verwendet werden muss. Eine weitere Möglichkeit, den Gussfehler zu beheben, ist es, mit artfremden Schweißzusatz, beispielsweise Ni-Fe-Elektroden zu Schwei-βen, was keine erhöhten Vorwärmtemperaturen erforderlich macht.

Allerdings besteht bei beiden Schweißungen das Problem, dass die mechanischen Eigenschaften, die durch das jeweilige Verfahren erzielt werden, die mechanischen Eigenschaften des Grundwerkstoffes häufig nicht erreichen.

Daher muss von Fall zu Fall entschieden werden, ob die Gusskomponente verworfen oder/und neu gefertigt werden muss.

Nicht nur bei der Neufertigung, sondern auch im Servicefall, müssen Schäden an Gusseisenkomponenten repariert werden, da in kurzen Revisionszeiträumen keine Neubauteilfertigung möglich ist. Die WO 2004/058441 A2 (Basis für den Oberbegriff von Anspruch 1) offenbart ein Verfahren zum Lichtbogenschweissen von duktilem Gusseisen unter Vermeidung von Gefügeveränderungen und negativer Beeinflussung der Eigenschaften des duktilen Gusseisens.

Es ist Aufgabe der Erfindung, ein Verfahren zur Herstellung einer Oberfläche eines Grundstoffes anzugeben, das eine verbesserte Qualität aufweist.

Gelöst wird diese Aufgabe durch Z ein Verfahren nach Anspruch 1, also ein Verfahren zur Herstellung einer Oberfläche eines Grundwerkstoffes, wobei der Grundwerkstoff Gusseisen aufweist, mit den Schritten:
- Lokalisieren einer Teiloberfläche,
- Herstellung einer ersten Pufferschicht auf der Teiloberfläche, wobei ein Puffer-Schweißverfahren in Verbindung mit einem Puffer-Schweißzusatz verwendet wird, wobei die Schweißparameter so ausgewählt sind, dass die Wärmeeinbringung in den Grundwerkstoff gering ist,
- Herstellung einer Füllschicht auf der Pufferschicht, wobei das MAG-Schweißverfahren verwendet wird, wobei ein NiFe-Schweißzusatzwerkstoff verwendet wird,
- Wobei keine Vorwärmung erfolgt,
wobei bei der Herstellung der Pufferschicht das MIG-Schweißverfahren eingesetzt wird und ein Schweißzusatz verwendet wird, der im Wesentlichen 65 Gewichts-% Ni und im Wesentlichen 30 Gewichts-% Fe aufweist,
wobei bei der Herstellung der Füllschicht ein Schweißzusatz verwendet wird, der im Wesentlichen 55 Gewichts-% Ni und im Wesentlichen 30 Gewichts-% Fe aufweist.

Vorteilhafte Weiterbildungen sind in den Unteransprüchen angegeben.

Mit der Erfindung wird somit das Ziel verfolgt, eine Schweißmethode mit Lichtbogenschweißprozessen anzugeben, das ohne bzw. mit niedrigen Vorwärmtemperaturen auskommt, welche vergleichbare Eigenschaften zum Grundwerkstoff erreicht.

Die Schweißmethode beinhaltet einen zweistufigen Prozess mit einem auf die Schweißaufgabe und den Schweißprozess abgestimmten Schweißzusatzwerkstoff, welcher in erheblichem Maße Einfluss auf die Qualität der Schweißung hat. Durch eine gezielte Auswahl des Schweißprozesses, des Schweißzusatzwerkstoffs und der Schweißparameter ist es möglich, sowohl Fehler in der Anbindung an den Grundwerkstoff, als auch Fehler im Schweißgut bzw. der Füllung zu unterbinden.

Zunächst wird erfindungsgemäß über eine Pufferung die Anbindung an den Grundwerkstoff geschaffen. In einem zweiten Schritt wird anschließend die Füllung realisiert.

Mit dem erfindungsgemäßen Schweißverfahren/-Prozess ist es möglich, Fertigungs- und Reparaturschweißungen herzustellen, die die mechanischen Eigenschaften des Grundwerkstoffs erfüllen. Dies erfolgt bei niedrigen Temperaturen (schwitzwasserfrei, ca. 100°C) und begünstigt somit das Schweißen an fertig bearbeiteten oder nahezu fertig bearbeiteten Bauteilen, da der Verzug infolge der geringen Wärmeeinbringung minimiert wird.

Ein wesentlicher Vorteil ist, dass sich bei der Neufertigung von Gusseisenkomponenten, bei denen z. B. während der spanenden Bearbeitung Gussfehler angeschnitten werden, durch die erfindungsgemäßen Schweißung repariert werden können. Ein Verwerfen der Gusseisenkomponente samt damit verbundener zeitaufwendiger Neufertigung ist daher nicht notwendig.

Für Bauteile, die sich bereits im Einsatz befinden und bei denen beispielsweise im Zuge der Revision Schäden in Form von Rissen, Materialabtrag o. ä. festgestellt wurden, bietet sich das erfindungsgemäße Verfahren an, diese schweißtechnisch zu ertüchtigen. Folglich ist eine Verlängerung des Revisionszeitraums häufig nicht erforderlich.

In einer ersten vorteilhaften Weiterbildung weist der Grundwerkstoff Gusseisen mit Kugelgraphit auf.

In einer Z einer nicht von der Erfindung umfassten Alternative wird als Pufferschweißverfahren das WIG-Schweißverfahren eingesetzt, wobei als Schweißzusatz NiFe-Schweißzusatz (Typ NiFe-2 nach EN ISO 1071) verwendet wird.

Erfindungsgemäß wird das MIG-Schweißverfahren als Puffer-Schweißverfahren Z eingesetzt, wobei als Schweißzusatz NiFe-Schweißzusatz vom Typ NiFe-1 nach EN ISO 1071 verwendet werden kann.

Bei der Herstellung der Füllschicht kann in einer nicht zur Erfindung gehörenden Alternative auch das MIG-Verfahren verwendet werden, wobei ein NiFe-Schweißzusatzwerkstoff verwendet wird, insbesondere ein Ni-Fe-Schweißzusatz.

In einer weiteren vorteilhaften Weiterbildung wird vor Herstellung der Füllschicht eine zweite Pufferschicht aufgebracht.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Ausführungsbeispiele der Erfindung werden nachfolgend anhand der Zeichnung beschrieben. Diese soll die Ausführungsbeispiele nicht maßgeblich darstellen. Vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

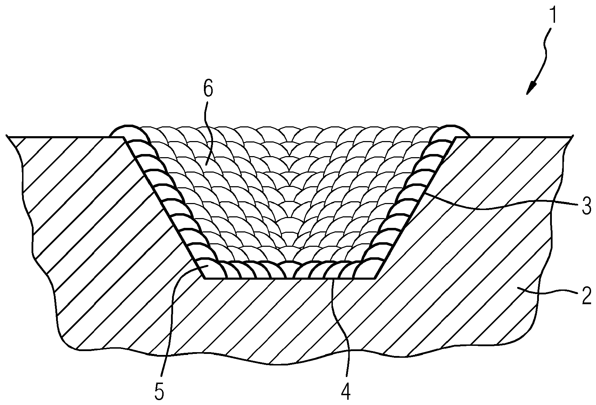

Es zeigt
Figur 1 eine Schnittdarstellung durch eine Komponente Die Figur zeigt eine Komponente 1, die durch ein Gussverfahren hergestellt wurde. Der Grundwerkstoff 2 weist Gusseisen mit Kugelgraphit auf. Die Komponente 1 weist eine Teiloberfläche 3 auf, wobei die Teiloberfläche 3 als eine Vertiefung 4 ausgebildet ist. Zur Anbindung des Schweißgutes an den Grundwerkstoff 2 wird in einem nicht zur Erfindung gehörendem Beispiel das WIG-Schweißverfahren in Verbindung mit einem NiFe-Schweißzusatz (Typ NiFe-2 nach EN ISO 1071) gewählt und zweilagig ausgeführt, wobei die Schweißparameter so ausgewählt werden, dass die Wärmeeinbringung in den Grundwerkstoff 2 gering ist. Im Rahmen der Erfindung wird alternativ zu dem WIG-Schweißprozess auf einen MIG-Schweißprozess zurückgegriffen, dessen Parameter ebenfalls so weit modifiziert werden, dass die Wärmeeinbringung in den Grundwerkstoff gering ist. Als Schweißzusatz wird ein NiFe-Schweißzusatz (Typ NiFe-1 nach EN ISO 1071) eingesetzt Somit wird in einem ersten Schritt die Teiloberfläche 3 lokalisiert. In einem nächsten Schritt wird eine erste Pufferschicht 5 auf der Teiloberfläche 3 aufgebracht. Mit den geeignet gewählten Schweißparametern wird erreicht, dass in der Anbindung und in der Wärmeeinflusszone keine Risse entstehen und die Wärmeeinflusszone vergleichweise schmal und gleichmäßig ausgebildet wird. Durch die Schweißparameterwahl der zweiten WIG-Lage wird die Wärmeeinflusszone zum Grundwerkstoff 2 gezielt thermisch beeinflusst und somit die mechanischen Eigenschaften optimiert.

In einem weiteren Schritt wird, wenn die zweilagige Pufferung nicht ausreicht, um die Komponente auszugleichen, eine Füllschicht 6 auf die Pufferschicht 5 aufgebracht. Dies erfolgt im Rahmen eines nicht zur Erfindung gehörenden Beispiels mittels einer Füllschweißung mit dem MIG-Schweißprozess. In diesem MIG-Schweißprozess wird ebenfalls ein NiFe-Schweißzusatzwerkstoff eingesetzt, der identisch mit dem Schweißzusatzwerkstoff ist, der beim WIG-Schweißen zur Anbindung an die erste Lage genutzt wird.

Die Herstellung der Oberfläche erfolgt so, dass keine Vorwärmung erfolgt bzw. bei Temperaturen von weniger als 100°C durchgeführt wird.

Bei der Herstellung der Pufferschicht wird Argon verwendet, wobei bei der Herstellung der Füllschicht ein Gemisch aus Argon und Co₂ verwendet wird.

Als Puffer-Schweißverfahren wird erfindungsgemäß das MIG-Schweißverfahren eingesetzt werden, wobei ein Schweißzusatz verwendet wird, der im Wesentlichen 65 Gewichts-% Ni und im Wesentlichen 30 Gewichts-% Fe aufweist.

Bei der Herstellung der Füllschicht wird ein Schweißzusatz verwendet, der im Wesentlichen 55 Gewichts-% Ni und im Wesentlichen 30 Gewichts-% Fe aufweist.

Als Puffer-Schweißverfahren kann bei einem nicht zur Erfindung gehörenden Beispiel auch das WIG-Schweißverfahren verwendet werden, wobei sowohl beim Puffer-Schweißverfahren als auch beim MAG-Schweißverfahren ein Schweißzusatz verwendet wird, der im Wesentlichen 55 Gewichts-% Ni und im Wesentlichen 30 Gewichts-% Fe aufweist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der mittels der Patentansprüche definierten Erfindung zu verlassen.

## Patentansprüche

1. Verfahren zur Herstellung einer Oberfläche eines Grundwerkstoffes (2),
wobei der Grundwerkstoff (2) Gusseisen aufweist,
mit den Schritten:
- Lokalisieren einer Teiloberfläche (3) nur auf der Oberfläche des einen Grundwerkstoffes (2),
- Herstellung einer ersten Pufferschicht (5) auf der Teiloberfläche (3), wobei ein Puffer-Schweißverfahren in Verbindung mit einem Puffer-Schweißzusatz verwendet wird, wobei die Schweißparameter so ausgewählt sind, dass die Wärmeeinbringung in den Grundwerkstoff (2) gering ist, so dass in der Wärmeeinflusszone keine Risse entstehen,
- Herstellung einer Füllschicht (6) auf der Pufferschicht (5), wobei das MAG-Schweißverfahren verwendet wird, wobei ein NiFe-Schweißzusatzwerkstoff verwendet wird,
wobei keine Vorwärmung erfolgt,
**dadurch gekennzeichnet, dass**
bei der Herstellung der Pufferschicht das MIG-Schweißverfahren eingesetzt wird und ein Schweißzusatz verwendet wird, der im Wesentlichen 65 Gewichts-% Ni und im Wesentlichen 30 Gewichts-% Fe aufweist,
wobei bei der Herstellung der Füllschicht ein Schweißzusatz verwendet wird, der im Wesentlichen 55 Gewichts-% Ni und im Wesentlichen 30 Gewichts-% Fe aufweist.

2. Verfahren nach Anspruch 1,
wobei bei der Herstellung der Pufferschicht Argon verwendet wird;
wobei bei der Herstellung der Füllschicht ein Gemisch aus Argon und Co₂ verwendet wird.

3. Verfahren nach einem der vorhergehenden Ansprüche, wobei der Grundwerkstoff (2) Gusseisen mit Kugelgraphit aufweist.

4. Verfahren nach einem der vorhergehenden Ansprüche, wobei die Teiloberfläche (3) eine Vertiefung (4) aufweist. 6. 7.

5. Verfahren nach Anspruch 1 , wobei als Schweißzusatz NiFe-Schweißzusatz vom Typ NeFe-1 nach EN ISO 1071 verwendet wird.

6. Verfahren nach einem der vorhergehenden Ansprüche, wobei vor Herstellung der Füllschicht (6) eine zweite Pufferschicht (5) aufgebracht wird.

7. Verfahren nach einem der vorhergehenden Ansprüche, wobei die Herstellung der Oberfläche bei Temperaturen unter 100°C erfolgt.

8. Komponente (1) für eine Strömungsmaschine, hergestellt mit einem Verfahren nach einem der Ansprüche 1 bis 7.

## Claims

1. Method for producing a surface of a base material (2), wherein the base material (2) comprises cast iron,
having the steps of:
- localizing a partial surface (3) only on the surface of the one base material (2),
- producing a first buffer layer (5) on the partial surface (3), wherein a buffer welding process is used in conjunction with a buffer welding additive, wherein the welding parameters are selected such that the heat input into the base material (2) is low, with the result that no cracks occur in the heat-affected zone,
- producing a fill layer (6) on the buffer layer (5), wherein the MAG welding process is used, wherein a NiFe welding filler material is used,
wherein no preheating is performed,
**characterized in that**
the MIG welding process is employed during the production of the buffer layer, and a welding additive is used which comprises substantially 65% by weight of Ni and substantially 30% by weight of Fe,
wherein, during the production of the fill layer, a welding additive is used which comprises substantially 55% by weight of Ni and substantially 30% by weight of Fe.

2. Method according to Claim 1,
wherein argon is used during the production of the buffer layer;
wherein a mixture of argon and CO₂ is used during the production of the fill layer.

3. Method according to either of the preceding claims, wherein the base material (2) comprises spheroidal graphite cast iron.

4. Method according to one of the preceding claims,
wherein the partial surface (3) has an indentation (4).

5. Method according to Claim 1,
wherein NiFe welding additive of NiFe-1 type in accordance with EN ISO 1071 is used as welding additive.

6. Method according to one of the preceding claims,
wherein a second buffer layer (5) is applied prior to production of the fill layer (6).

7. Method according to one of the preceding claims,
wherein the production of the surface takes place at temperatures below 100°C.

8. Component (1) for a turbomachine,
produced by a method according to one of Claims 1 to 7.

## Revendications

1. Procédé de production d'une surface d'un matériau (2) de base, dans lequel le matériau (2) de base a de la fonte,
comprenant les stades :
- localisation d'une surface (3) partielle seulement à la surface du un matériau (2) de base,
- production d'une première couche (5) tampon sur la surface (3) partielle, dans lequel on utilise un procédé de soudure tampon en liaison avec un métal d'apport tampon, dans lequel on choisit les paramètres de soudure, de manière à ce que l'apport de la chaleur au matériau (2) de base soit petit, de manière à ne pas créer de fissure dans la zone d'influence de la chaleur,
- production d'une couche (6) de remplissage sur la couche (5) tampon, dans lequel on utilise le procédé de soudure MAG, dans lequel on utilise un métal d'apport de soudure NiFe, dans lequel on n'effectue pas de préchauffage,
**caractérisé en ce que**
lors de la production de la couche tampon, on utilise le procédé de soudure MIG et on utilise un métal d'apport, qui comporte sensiblement 65% en poids de Ni et sensiblement 30% en poids de Fe, dans lequel, lors de la production de la couche de remplissage, on utilise un métal d'apport, qui comporte sensiblement 55% en poids de Ni et sensiblement 30% en poids de Fe.

2. Procédé suivant la revendication 1,
dans lequel, lors de la production de la couche tampon, on utilise de l'argon ;
dans lequel, lors de la production de la couche de remplissage, on utilise un mélange d'argon et de CO₂.

3. Procédé suivant l'une des revendications précédentes,
dans lequel le matériau (2) de base a de la fonte à graphite sphéroïdal.

4. Procédé suivant l'une des revendications précédentes,
dans lequel la surface (3) partielle a un creux (4).

5. Procédé suivant la revendication 1,
dans lequel on utilise comme métal d'apport, un métal d'apport en NiFe du type NeFe-1 suivant EN ISO 1071.

6. Procédé suivant l'une des revendications précédentes,
dans lequel on dépose une deuxième couche (5) tampon avant la production de la couche (6) de remplissage.

7. Procédé suivant l'une des revendications précédentes,
dans lequel la production de la surface s'effectue à des températures inférieures à 100°C.

8. Elément (1) d'une turbomachine, fabriqué par un procédé suivant l'une des revendications 1 à 7.
